# FASCICULE DE BREVET EUROPEEN

(11) **EP 0 856 924 B1**
(45) Date de publication et mention de la délivrance du brevet: **27.11.2002**
(21) Numéro de dépôt: 98400158.6
(22) Date de dépôt: 27.01.1998
(51) Int. Cl.: H01S 3/06, H01S 3/113, H01S 3/16, G02F 1/35

(54) **Microlaser solide déclenché passivement par absorbant saturable et son procédé de fabrication**
Durch einen sättigbaren Absorber passiv geschalteter Festkörpermikrolaser und dessen Herstellungsverfahren
Solid state microlaser passively switched by saturable absorber and method of fabrication

(30) Priorité: 30.01.1997 FR 9701010
(43) Date de publication de la demande: 05.08.1998
(73) Titulaire: COMMISSARIAT A L'ENERGIE ATOMIQUE, 75015 Paris (FR)
(72) Inventeur: Thony, Philippe, 38500 La Buisse (FR); Molva, Engin, 38000 Grenoble (FR); Ferrand, Bernard, 38340 Voreppe (FR); Borel, Corinne, 75015 Paris (FR)
(74) Mandataire: Moutard, Pascal Jean

(56) Documents cités:
- EP-A- 0 653 824
- EP-A- 0 657 976
- FR-A- 1 448 892
- US-A- 5 557 624
- US-A- 5 654 973
- CAMARGO M B ET AL: "Co2+:YSGG saturable absorber Q switch for infrared erbium lasers" OPTICS LETTERS, vol. 20, no. 3, pages 339-341, XP000482488

## Description

### Domaine technique et art antérieur

La présente invention a pour objet un microlaser solide, une cavité pour ce microlaser et un procédé de fabrication de cette cavité.

Un des avantages du microlaser réside dans sa structure en un empilement de multicouches. Le milieu actif laser est constitué par un matériau de faible épaisseur entre 150-1000 µm et de petites dimensions (quelques mm²), sur lequel des miroirs diélectriques de cavité sont directement déposés. Ce milieu actif peut être pompé par une diode laser III-V qui est soit directement hybridée sur le microlaser, soit couplée à ce dernier par fibre optique. La possibilité d'une fabrication collective utilisant les moyens de la micro-électronique autorise une production de masse de ces microlasers à très faible coût.

Les microlasers ont de nombreuses applications, dans des domaines aussi variés que l'industrie automobile, l'environnement, l'instrumentation scientifique, la télémétrie.

Les microlasers connus ont en général une émission continue de quelques dizaines de mW de puissance. Cependant, la plupart des applications citées ci-dessus, nécessitent des puissances crêtes (puissance instantanée) de quelques kW délivrées pendant 10⁻⁸ à 10⁻⁹ secondes, avec une puissance moyenne de quelques dizaines de mW. Dans les lasers solides, on peut obtenir de telles puissances crêtes élevées en les faisant fonctionner en mode pulsé à des fréquences variant entre 10 et 10⁴ Hz. Pour cela, on utilise des procédés bien connus de déclenchement, par exemple par "Q-switch".

De façon plus précise, déclencher une cavité laser consiste à rajouter dans celle-ci des pertes variables dans le temps qui vont empêcher l'effet laser pendant un certain temps, durant lequel l'énergie de pompage est stockée dans le niveau excité du matériau à gain. Ces pertes sont brusquement diminuées, à des moments précis, libérant ainsi l'énergie emmagasinée en un temps très court (pulse géant). On atteint ainsi une puissance crête élevée.

Dans le cas d'un déclenchement dit actif, la valeur des pertes est pilotée de façon externe par l'utilisateur (exemple : miroir de cavité tournant, acousto-optique ou électro-optique intracavité changeant soit le trajet du faisceau, soit son état de polarisation). La durée de stockage, l'instant d'ouverture de la cavité ainsi que le taux de répétition peuvent être choisis indépendamment. En contrepartie, cela nécessite une électronique adaptée et complique le système laser. Un microlaser déclenché activement est décrit dans le document EP-724 316.

Dans le cas d'un déclenchement dit passif, les pertes variables sont introduites dans la cavité sous forme d'un matériau (appelé Absorbant Saturable - A.S. -) qui est fortement absorbant à la longueur d'onde laser et à faible densité de puissance, et qui devient pratiquement transparent lorsque cette densité dépasse un certain seuil qu'on appelle intensité de saturation de l'A.S.

Un microlaser déclenché passivement est décrit dans le document EP-653 824.

Ce document décrit, notamment, un microlaser comportant :
- un milieu actif solide, pouvant être constitué d'un matériau de base choisi parmi Y₃Al₅O₁₂, LaMgAl₁₁O₁₉, YVO₄, Y₂SiO₅, YLiF₄ ou GdVO₄, dopé avec de l'erbium (Er) ou avec un codopage erbium-ytterbium (Er-Yb),
- un absorbant saturable déposé par épitaxie en phase liquide, directement sur le milieu actif solide, et composé d'un matériau de base, identique à celui du milieu actif solide, et dopé avec des ions Er³⁺.

Ce microlaser permet d'obtenir une longueur d'émission d'environ 1,5 µm. Cette longueur d'émission présente un intérêt particulier, notamment dans le domaine des télécommunications optiques. La diversité des applications spécifiques dans ce domaine rend nécessaire de disposer d'autres sources microlasers qui permettent d'émettre à cette longueur d'onde ou au voisinage de cette longueur d'onde.

L'article de M.B. Camargo et al. intitulé "Co²⁺:YSGG saturable absorber Q-switch for infrared erbium lasers", paru dans Optics Letters, vol. 20, n°3, pages 339-341, 1995, décrit un laser déclenché passivement à l'aide d'un absorbant saturable Co²⁺:Y₃Sc₂Ga₃O₁₂ et un absorbant saturable Co²⁺:Y₃Al₅O₁₂. Il s'agit donc d'un absorbant saturable à base de YAG ou YSGG, dopé au Co²⁺. Pour faire rentrer un ion de charge 2+, il est cependant nécessaire de réaliser une compensation de charges du substrat avec un ion 4+ (chargé quatre fois positivement), et ceci pour garder la neutralité du composé. Ce problème de compensation de charges est d'autant plus délicat à résoudre que les cristaux décrits dans l'article de M.B. Carmago et al. sont d'abord produits de manière massive, pour être ensuite débités sous forme de tranches. De plus, la technique présentée dans ce document pour réaliser le cristal (méthode Czochralski) limite la concentration en dopants que l'on peut introduire dans la matrice, du fait de problèmes de stabilité. Enfin, ce document ne donne pas de réalisation précise pour un fonctionnement à haute fréquence de répétition.

### Exposé de l'invention

Afin de résoudre ces problèmes, l'invention a pour objet un microlaser solide, monolithique, qui émet à au moins une longueur d'onde du domaine infrarouge supérieure à 1,5 µm, et qui délivre un faisceau en impulsions, par un procédé de déclenchement passif. Un tel dispositif doit de préférence fonctionner à une haute fréquence de répétition. Le microlaser est composé d'au moins deux matériaux : un milieu amplificateur, solide, et un milieu absorbant saturable, ou jouant le rôle d'absorbant saturable, c'est-à-dire un modulateur de pertes auto-modulées.

L'invention a pour objet une cavité microlaser comportant un milieu actif solide émettant au moins dans une gamme de longueurs d'onde comprise entre 1,5 et 1,6 µm et un absorbant saturable de formule CaF₂:Co²⁺ ou MgF₂:Co²⁺ ou SrF₂:Co²⁺ ou BaF₂:Co²⁺ ou La_{0,9}Mg_{0,5-x}CoₓAl_{11,433}O₁₉ ou YAlO₃:Co²⁺ ou YAl₁₋₂ₓCoₓSiₓO₃) ou Y₃Al_{5-x-y-2z}GaₓSc_{y}Co_{z}Si_{z}O₁₂ ou Y₃₋ₓLuₓAl₅O₁₂:Co²⁺ avec 0<x pour ce composé ou Y₃₋ₓLuₓAl_{5-2y}Co_{y}Si_{y}O₁₂ ou Sr₁₋ₓMgₓLa_{y}Al_{12-y}O₁₉: Co²⁺ ou Sr₁₋ₓMg_{x-y}Co_{y}La_{z}Al_{12-z}O₁₉, avec o<y<x pour ce dernier composé.

Toutes ces compositions d'absorbants saturables permettent de réaliser l'élément absorbant saturable sous forme de couches minces, par exemple par épitaxie par jet moléculaire, ou par dépôt par technique sol-gel. Les couches minces présentent l'avantage de pouvoir être contraintes plus facilement que les structures massives.

Par ailleurs, les compositions CaF₂:Co²⁺, MgF₂:Co²⁺, SrF₂:Co²⁺, BaF₂:Co²⁺ ou La_{0,9}Mg_{0,5-x}CoₓAl_{11,433}O₁₉ ne nécessitent pas de compensation de charge du fait de l'introduction du cobalt en tant que dopant.

Par conséquent, l'absorbant saturable peut avoir la forme d'une couche mince, d'épaisseur comprise par exemple entre 1 µm et 200 µm (par exemple entre 5 µm et 150 µm).

Une microlentille peut être prévue sur une des faces du microlaser : ceci permet de stabiliser la cavité, et contribue à abaisser le seuil de fonctionnement du microlaser.

L'absorbant saturable peut être associé au milieu amplificateur, ou milieu actif solide, selon divers procédés :
- par assemblage avec une colle optique ou un cordon de résine,
- par dépôt sous forme de couches minces (par exemple, une couche sol-gel dopée Co²⁺, ou une couche épitaxiée dopée Co²⁺),
- ou par un mélange des deux procédés : on réalise d'abord un dépôt sur un substrat qui n'est pas le matériau laser, et on assemble ensuite ce substrat avec le milieu amplificateur. Ensuite, le substrat de la couche peut être enlevé, ou bien il peut déjà lui-même contenir l'un des miroirs de la cavité microlaser.

L'absorbant saturable peut donc être un matériau de différents types :
- un cristal dopé avec un ion absorbant saturable (par exemple : LMA dopé Co²⁺),
- une couche monocristalline dopée avec un ion absorbant saturable (par exemple : LMA:Co²⁺, ou bien encore CaF₂:Co²⁺ ou MgF₂:Co²⁺ ou SrF₂:Co²⁺ ou BaF₂:Co²⁺), déposée par exemple par épitaxie en phase liquide sur le cristal laser, accordée en maille ou en contrainte,
- une couche sol-gel déposée sur le matériau laser, dopée avec un ion absorbant saturable Co²⁺.

Le microlaser, ou la cavité microlaser, selon l'invention peut fonctionner à haute fréquence de répétition (≥100 ou 200 Hz).

L'invention concerne également un procédé de réalisation d'un dispositif tel que décrit ci-dessus.

### Brève description des figures

De toute façon, les caractéristiques et avantages de l'invention apparaîtront mieux à la lumière de la description qui va suivre. Cette description porte sur les exemples de réalisation, donnés à titre explicatif et non limitatif, en se référant à des dessins annexés sur lesquels :
- la figure 1 représente schématiquement un microlaser selon l'invention,
- la figure 2 représente schématiquement une autre structure de microlaser selon l'invention,
- les figures 3 et 4 sont des étapes de réalisation d'un microlaser selon l'invention.

### Description détaillée de modes de réalisation de l'inventio

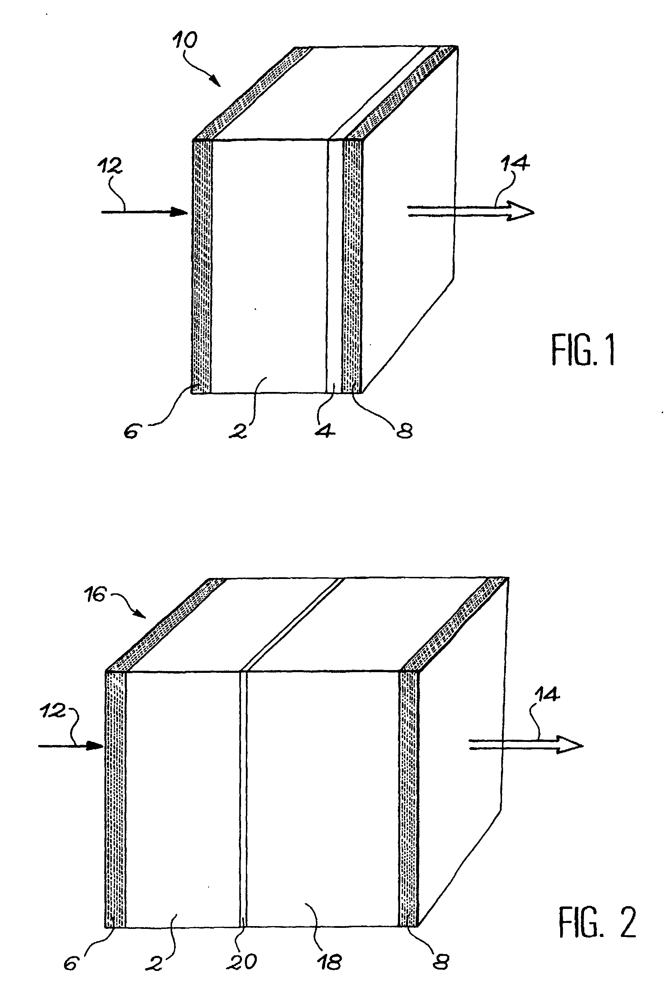

Un microlaser ou une cavité microlaser selon l'invention est représenté sur la figure 1 et comporte un milieu actif solide 2, ainsi qu'un absorbant saturable 4. Ces deux éléments sont compris entre deux miroirs 6 et 8 qui ferment la cavité laser. La référence 10 désigne l'ensemble de la cavité, les références 12 et 14 désignent respectivement un faisceau de pompage de la cavité microlaser et un faisceau émis.

Un microlaser selon l'invention est associé à des moyens de pompage de la cavité, non représentés sur la figure.

Le matériau constitutif du milieu actif 2 sera par exemple dopé à l'erbium (Er) pour une émission laser autour de 1,5 µm. Ce matériau pourra être choisi, par exemple, parmi l'un des matériaux suivants : YAG (Y₃Al₅O₁₂), LMA (LaMgAl₁₁O₁₉), YSO (Y₂SiO₅), YSGG (Y₃Sc₂Ga₃O₁₂), GdVO₄, SYS (SrY₄(SiO₄)₃O), CAS (Ca₂Al₂SiO₇) etc. Ce choix sera conditionné par un certain nombre de critères, mais dépendra également des applications. Parmi ces critères, on peut citer :
- un fort coefficient d'absorption à la longueur d'onde de la pompe (par exemple, diode laser III-V émettant autour de 980 nm), pour augmenter l'efficacité de pompage, tout en gardant une faible épaisseur de matériau (<1mm).
- une large bande d'absorption à la longueur d'onde du faisceau de pompage, pour répondre au problème de la stabilisation en longueur d'onde de la diode laser, et simplifier ainsi le choix et la commande électrique de la diode laser de pompe,
- une forte section efficace d'émission stimulée, pour obtenir des puissances de sortie élevées et de forts rendements,
- une faible largeur de la bande d'émission pour obtenir aisément un laser monofréquence. Ou bien au contraire, une large bande d'émission, pour réaliser une émission laser accordable en fréquence,
- de bonnes propriétés thermomécaniques, pour simplifier l'usinage du matériau et pour limiter les effets thermiques néfastes par une bonne évacuation de la chaleur produite par l'absorption de la pompe (cette chaleur en excès dépendra du rendement énergétique du laser),
- une durée de vie longue dans l'état excité pour un stockage d'énergie important. Ou bien durée de vie courte pour une cadence de déclenchement rapide,
- la possibilité de trouver le matériau dans de grandes dimensions pour pouvoir fabriquer simultanément, en fabrication collective, le plus grand nombre de microlasers avec un cristal laser.

En général, aucun des matériaux connus ne répond en même temps à tous ces critères. Cependant, parmi les matériaux connus, ceux qui sont les plus adaptés au fonctionnement du microlaser, en particulier dans le cas d'un dopage Nd³⁺, sont (avec des durées de vie comparables de quelques centaines de microsecondes) :
- YVO₄, qui présente un bon coefficient et une large bande d'absorption ainsi qu'une bonne section efficace. Mais il possède une mauvaise conductivité thermique, on ne l'obtient que sous de faibles dimensions et il est fragile,
- YAG, dont le coefficient d'absorption et la section efficace d'émission stimulée sont moyens et dont les largeurs de bandes d'absorption et d'émission sont faibles. Il se présente sous de grandes dimensions et a une bonne conductivité thermique,
- LMA : ce matériau offre un coefficient d'absorption et une section efficace faibles. Les bandes d'absorption et d'émission sont larges. Il est de grande dimension mais sa conductivité thermique est mauvaise.

Un autre matériau possible est le verre phosphate dopé erbium (dopage compris entre 0,5% et 0,9% d'oxyde) et ytterbium (entre 15% et 20% d'oxyde)

Pour une émission à 1,5 µm et au-delà, on choisira les ions actifs par exemple parmi l'erbium (Er) ou le chrome (Cr) ou un codopage erbium-ytterbium (Er+Yb) ou un codopage erbium-ytterbium-cérium (Er+Yb+Ce). Par rapport au dopage à l'erbium seul, le codopage Er+Yb permet d'absorber plus d'énergie de pompage. L'ion Yb absorbe alors le faisceau de pompage puis transfère l'énergie à l'ion Er.

Les matériaux dopés à l'erbium présentent une bande d'émission située autour de 1,5 µm de longueur d'onde. Cette bande est assez large : dans le verre, elle atteint 25 nm de large. Elle peut être plus ou moins large et plus ou moins décalée selon la matrice qui est dopée avec l'ion erbium. Ainsi, dans le YAG, la bande est plutôt centrée autour de 1,64 µm.

Dans un laser, l'ion erbium a une longueur d'onde d'émission précise, mais variable, à l'intérieur de cette bande. Ainsi, dans un verre dopé Er, Yb des longueurs d'onde allant de 1,53 à 1,58 µm ont été observées. Ceci s'explique car le gain net du laser varie avec la puissance de pompage : son maximum se déplace.

Le gain net est obtenu en retranchant les pertes par absorption au gain du milieu amplificateur. L'ion erbium donne des systèmes lasers à trois niveaux. Cela signifie que, non seulement le milieu laser présente du gain à la longueur d'onde, mais il présente aussi des pertes par absorption à cette même longueur d'onde. Lorsque le laser fonctionne, on a simultanément des pertes et du gain dans le milieu laser. Mais ces deux phénomènes sont plus ou moins forts selon la longueur d'onde de fonctionnement. De plus, ils dépendent des paramètres du laser. Il se peut donc que pour une certaine configuration (fixée par la puissance de pompe, la longueur et la concentration du matériau laser, la transmission des miroirs, les pertes de la cavité), le gain net soit plus fort que dans une autre configuration, pour une longueur d'onde donnée. Pour une autre configuration, la longueur d'onde de gain net maximum sera différente. En particulier, on peut faire varier cette longueur d'onde en faisant varier la puissance de pompage.

En ce qui concerne l'épaisseur e du milieu actif 2, on pourra se reporter, pour plus de détails, au document EP-653 824 qui donne des épaisseurs typiques de milieux 'lasers pour un fonctionnement monomode, ainsi que la relation entre l'épaisseur et le nombre de modes.

L'absorbant saturable peut être choisi parmi les composés suivants :
- CaF₂ dopé au cobalt (CaF₂:Co²⁺), ou les composés de la même famille : MgF₂:Co₂+, SrF₂:Co²⁺, BaF₂:Co²⁺,
- les composés de la famille du LMA (LaMgAl₁₁O₁₉) dopés au cobalt, par exemple dans une proportion supérieure à 0,1% (par exemple : 0,3% ou 0,15%) et inférieure à 1% (par exemple : 0,4%). Un dopage à 0,3% en ions cobalt Co²⁺ a été réalisé dans du LMA de formule La_{0,9}Mg_{0,5}Al_{11,433}O₁₉, le matériau étant, après dopage, de formule : La_{0,9}Mg_{0,4985}Co_{0,0015}Al_{11,433}O₁₉. La formule générale du matériau dopé est : La_{0,9}Mg_{0,5-x}CoₓAl_{11,433}O₁₉. Il est également possible de partir de LMA stoechiométrique (de formule LaMgAl₁₁O₁₉) (formule après dopage : LaMg₁₋ₓCoₓAl₁₁O₁₉). Une certaine variation autour de ces différentes compositions est possible,
- le composé Sr₁₋ₓMgₓLa_{y}Al_{12-y}O₁₉ (ou ASL) dopé au cobalt. Dans ce composé, qui est une solution solide entre SrAl₁₂O₁₉ et LaMgAl₁₁O₁₉ (LMA), l'ion cobalt vient remplacer l'ion magnésium (Mg), (formule du matériau dopé : Sr₁₋ₓMg_{x-z}Co_{z}La_{y}Al_{12-y}O₁₉ avec o<z<x),
- le composé YAP, dopé au cobalt (ou YAlO₃:Co²⁺),
- le YAG dopé Co²⁺, de formule Y₃Al₅₋₂ₓCoₓSiₓO₁₂, l'ion Si⁴⁺ permettant de réaliser une compensation de charge,
- les solutions solides à base de YAG, dopés Co²⁺ : ces matrices sont des grenats dérivés du YAG (Y₃Al₅O₁₂). L'ion aluminium (Al) est progressivement remplacé par des ions gallium (Ga) ou des ions scandium (Sc) (Y₃Al_{5-x-y}GaₓSc_{y}O₁₂). Une autre solution solide possible est obtenue en remplaçant l'yttrium par du lutécium : on obtient ainsi du Y₃₋ₓLuₓAl₅O₃, qui peut lui aussi être dopé au cobalt Co²⁺. Les formules de ces matériaux dopés sont, respectivement, Y₃Al_{5-x-y-2z}GaₓSc_{y}Co_{z}Si_{z}O₁₂ et Y₃₋ₓLuₓAl_{5-2y}Co_{y}Si_{y}O₃.

Dans tous ces matériaux, le cobalt présente une large bande d'absorption vers 1,5 µm. La largeur de cette bande et sa position en longueur d'onde dépend de la matrice, mais la bande reste toujours au voisinage de 1,5 µm, au moins comprise entre 1,5 µm et 1,6 µm.

Dans tous ces composés, l'ion Co²⁺ sera substitué avec plus ou moins de facilité dans la matrice choisie. En ce qui concerne le LMA, ce matériau contient des ions Mg²⁺, qu'on peut substituer avec des ions cobalt sans compensation de charges. Il en va de même pour les composés CaF₂, MgF₂, SrF₂ et BaF₂, ainsi que pour l'ASL. Les autres composés mettent en oeuvre une compensation de charges.

Tous ces composés peuvent par ailleurs être déposés sous la forme de couche mince, par exemple par épitaxie par jet moléculaire ou en phase liquide ou par technique sol-gel.

Ces composés peuvent être également réalisés par tirage Czochralski, (on peut se reporter par exemple à la thèse de C. Borel soutenue le 12 Novembre 1990 devant l'Université de Paris VI, pages 43-48), sous forme massive.

La technique d'épitaxie par jet moléculaire est décrite par exemple dans la thèse de E. Daran soutenue le 28 Avril 1994 devant l'INSA Toulouse, pages 57-60 et pages 64-76.

La technique sol-gel est décrite dans le document paru dans le SPIE, vol. 1794, Integrated Optical Circuits, page 303, 1992.

Le document EP-653 824 donne des informations détaillées sur les procédés de réalisation de couches minces d'absorbant saturable par épitaxie en phase liquide. Par exemple, pour réaliser une couche dopée au cobalt, on peut utiliser un bain ayant la composition suivante :
- Pb/B :12,
- Al/Y=4 (formation de la phase Y₃Al₅O₁₂),
- Al/Co=10 pour commencer, car le cobalt se substitue facilement à l'aluminium.

Pour obtenir la valeur II ( Co²⁺) du cobalt, du silicium sous forme d'oxyde SiO₂ est introduit dans le bain. Le silicium est là pour compenser la charge du cobalt Co²⁺ par un ion Si⁴⁺, tous les deux en substitution de 2 ions aluminium Al³⁺. La concentration molaire du silicium est la même que celle du cobalt.

En couche mince (couche sol-gel ou couche épitaxiée) l'épaisseur des couches d'absorbant saturable peut être beaucoup plus faible que dans le cas des absorbants saturables massifs. En effet, quelques microns à une centaine de microns suffisent pour obtenir un coefficient d'absorption correct pour le fonctionnement du laser. Ainsi, grâce à cette faible épaisseur, l'encombrement du microlaser reste faible, surtout lorsque le milieu laser sert de substrat pour le dépôt de la couche mince.

De façon optionnelle et comme expliqué dans l'Article de A. Eda et al., CLEO'92, paper CWG33, p. 282, (Conf. on Laser and Electrooptics, Anaheim, USA, May 1992), il est possible de fabriquer un réseau de microlentilles en un matériau transparent (silice, ...) sur la surface du matériau laser. Les dimensions typiques de ces microlentilles sont :
- diamètre de cent à quelques centaines de microns,
- rayons de courbure de quelques centaines de micromètres à quelques millimètres.

Ces microlentilles servent à réaliser des cavités "stables" (la cavité "plan-plan" n'est pas stable) du type plan-concave. Elles permettent également, dans le cas d'un pompage optique, de focaliser le faisceau pompe.

Pour réaliser une cavité laser complète, le milieu actif avec sa (ou ses) couche(s) d'absorbant saturable sera compris entre deux miroirs 6, 8. Le miroir d'entrée, déposé par des procédés connus, sera de préférence un miroir de type dichroïque présentant une réflectivité maximum (la plus proche possible de 100%) à la longueur d'onde du laser et une transmission la plus élevée possible (>80%) à la longueur d'onde de la pompe (en général vers 980 nm pour les matériaux dopés Er). Le miroir de sortie est également de type dichroïque mais laisse passer quelques pour cent du faisceau laser.

On voit immédiatement l'avantage d'une telle structure puisqu'elle ne nécessite, à aucun moment, d'alignement optique des différents composants. Elle évite également les problèmes liés à une structure où le milieu actif est codopé avec les ions actifs lasers et les ions d'absorbant saturable : on sépare en effet le milieu actif et le milieu absorbant saturable et on peut régler et choisir indépendamment les épaisseurs et les concentrations des ions dans ces deux milieux, d'où une plus grande liberté de conception de ces derniers.

Le pompage de ce type de cavité sera préférentiellement un pompage optique. Ainsi, une diode laser à 980 nm est particulièrement bien adaptée pour la gamme de longueurs d'onde envisagée.

La cavité microlaser peut être montée dans un boîtier mécanique qui sera prévu pour recevoir la diode laser de pompe. On peut également prévoir deux boîtiers séparés : l'un pour recevoir la cavité microlaser, l'autre pour recevoir la diode laser de pompe, les deux boîtiers étant reliés par une fibre optique, à l'aide d'un connecteur prévu dans chaque boîtier. Ces structures sont illustrées dans le document EP-653 824.

L'invention concerne également un procédé de fabrication d'une cavité microlaser telle que décrite précédemment.

Cette fabrication peut se faire selon les étapes suivantes, toutes compatibles avec une fabrication collective. En fonction du type d'absorbant saturable, le procédé diffère. L'absorbant saturable peut se présenter sous la forme d'une couche mince déposée sur le matériau laser (cas A), d'un matériau massif conditionné en lame mince et collé sur le matériau laser (cas B), ou bien d'un mélange des deux technologies (cas C) : dépôt de la couche sur un substrat neutre (silice par exemple) et assemblage avec le matériau laser. Ce substrat peut ensuite être enlevé en utilisant des procédés de micro-électronique connus (par exemple par gravure d'une couche intermédiaire sacrificielle, procédé'encore appelé "lift off").

On peut distinguer, dans ce/ces procédé(s), les étapes successives suivantes :
1) - La première étape consiste à choisir le matériau actif laser. On a déjà présenté, ci-dessus, les différents matériaux possibles (YVO₄, YSO, YAG, LMA, etc.) ainsi que les différents critères qui permettront à l'homme du métier de choisir entre ces différents matériaux.
2) - La deuxième étape sera une étape de conditionnement du cristal laser choisi : on l'oriente et on le découpe en lames d'épaisseur comprise entre 0,5 et 5 mm et, par exemple, de 25 mm de diamètre, en fonction éventuellement des axes cristallographiques pour un matériau cristallin anisotrope. Une scie à lame diamantée peut être par exemple utilisée.
3) - La troisième étape est une étape de rodage et de polissage des lames, et a deux objectifs :
   - d'une part, enlever la couche d'écrouissage superficielle due à la découpe,
   - d'autre part, ramener l'épaisseur des lames à une épaisseur légèrement supérieure à la spécification du microlaser. En effet, l'épaisseur du milieu actif est un paramètre qui conditionne certaines caractéristiques du microlaser (largeur du spectre et nombre de modes longitudinaux notamment).

   Les lames rodées et rapprochées de l'épaisseur finale sont polies sur les deux faces avec une qualité optique.
4) - Une étape de préparation d'un absorbant saturable.

Ainsi qu'il a été dit plus haut, plusieurs types de préparation peuvent être réalisés, correspondant à différents types d'absorbant saturable.

### 4A - Dépôt de couches minces d'absorbant saturable (structure de la figure 1)

4A1) - Préparation chimique du matériau à déposer (par exemple préparation de la solution colloïdale précurseur du sol-gel, selon un procédé décrit dans l'article de Q. He et al. Intitulé "Rare Earth Doped Aluminium Phosphate Sol-Gel Films" paru dans SPIE, vol. 1794, Integrated Optical Circuits II, 1992, page 303 ; préparation du bain fondu pour l'épitaxie ; pour l'épitaxie par jet moléculaire, on peut se reporter à la thèse de E. Daran déjà citée ci-dessus (page 68).
4A2) - Dépôt du matériau sous forme de couche mince, selon un procédé connu et spécifique (par exemple, dépôt à la tournette de la solution colloïdale précurseur du sol-gel ; épitaxie en phase liquide d'un matériau absorbant saturable ; dépôt par épitaxie par jet moléculaire).
4A3) - Repolissage des lames, dans le but d'enlever une éventuelle rugosité provoquée par le procédé de dépôt, et dans le but d'amener l'épaisseur de la couche déposée à l'épaisseur voulue pour le fonctionnement du microlaser (pour une couche mince cette épaisseur peut être comprise entre 1 µm et 200 µm, par exemple 10 µm, 50 µm, 100 µm, 150 µm).
4A4) - Gravure éventuelle de micro surfaces sphériques sur les faces polies, selon l'état de l'art des composants micro-optiques déjà cité ci-dessus. Cette étape peut éventuellement avoir lieu avant le dépôt de la couche d'absorbant saturable.
4A5) - Dépôt des miroirs diélectriques d'entrée et de sortie sur les plaquettes, par exemple à froid. Il s'agit de préférence de miroirs dichroïques, obtenus par un dépôt de multicouches diélectriques.

L'étape 4A4 peut être réalisée avant ou après les étapes 4A1-2-3, sauf dans le cas de l'épitaxie en phase liquide qui a lieu à haute température et risque de détruire les micro-surfaces. La gravure micro des surfaces sphériques (4A4) peut être réalisée avant ou après les étapes de dépôt de couche mince.

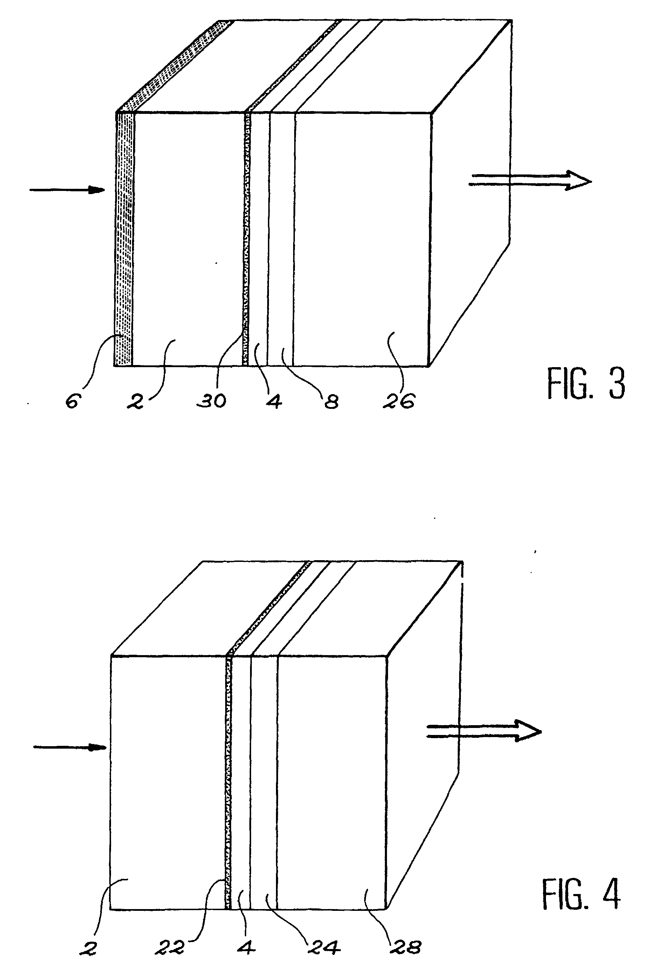

### 4B - Absorbant saturable massif : il présente alors la structure de la figure 2 où des références identiques à celles de la figure 1 y désignent des mêmes éléments. L'absorbant saturable est désigné par la référence 18.

4B1) - Découpage du matériau absorbant saturable, préparé par exemple par tirage Czochralski.
4B2) - Polissage des deux faces des tranches (faces planes et parallèles).
4B3) - Dépôt du miroir d'entrée sur le matériau laser et du miroir de sortie sur l'absorbant saturable (ou inversement), à l'aide des techniques déjà décrites en 4A5).
4B4) - assemblage d'une lame de matériau laser et d'une lame de matériau absorbant saturable, par exemple par collage sous presse (la référence 20 désigne un film de colle) ou en suivant le procédé décrit dans la demande FR 96 08943 du 17 Juillet 1996 (assemblage par contact intime ou par adhérence moléculaire). Les miroirs sont à l'extérieur de l'assemblage.

### 4C - Technologie mixte

Ce cas est illustré sur les figures 3 et 4. Dans le cas de la figure 3, l'absorbant saturable 4 est préalablement réalisé sur une couche de miroirs 8, elle est même réalisée sur un substrat 26, par une technique de dépôt en couches minces telle que l'une de celles décrites ci-dessus. Le substrat peut être choisi transparent à la longueur d'onde d'émission du faisceau laser, auquel cas il n'a pas besoin d'être éliminé. L'ensemble absorbant saturable-miroir 8-substrat est ensuite assemblé avec le milieu actif laser 2 par une couche de colle 30.

Dans le cas de la figure 4, l'absorbant saturable 4 est réalisé sur une couche sacrificielle 24, destinée à être gravée, et même formée sur un substrat 28. L'ensemble est relié au milieu amplificateur 2 à l'aide d'une couche de colle 22. La couche 24 est ensuite gravée, ce qui permet d'éliminer le substrat 28. Les miroirs peuvent ensuite être réalisés comme expliqué ci-dessus.

Le procédé redevient commun pour les étapes suivantes :
5) - Découpe de puces microlaser, individuelles, de surface de l'ordre de 1 mm², avec une scie circulaire diamantée (identique à celle utilisée en micro-électronique).
6) - Connexion de la diode de pompage au microlaser.

Il est aussi possible de mélanger ces deux procédés comme nous l'avons dit. On utilise une technique de report telle que le "lift off", bien connue des fondeurs électroniciens, pour réaliser l'assemblage de la partie absorbant saturable sur le matériau laser, et enlever le substrat de dépôt.

### EXEMPLE DE REALISATION

Un cristal de LMA:Co a été réalisé. Il est dopé à 0,3% en ions cobalt Co²⁺, qui viennent se substituer à l'ion Mg²⁺ dans la formule du LMA (La_{0,9}Mg_{0,5}Al_{11,433}O₁₉).

Avec le dopage cobalt, cette formule devient : La_{0,9}Mg_{0,4985}Co_{0,0015}Al_{11,433}O₁₉.

Le cristal est orienté <100>. Ce cristal a été découpé en petites lamelles de diamètre 5 mm. Différentes épaisseurs ont été réalisées : 500, 750, 1000 µm. Les lamelles sont polies sur les deux faces, de façon à obtenir deux faces les plus planes possibles et les plus parallèles possibles. Ces lamelles sont assemblées de façon mécanique avec une lamelle de verre dopé Er, Yb qui est le matériau laser, et deux miroirs qui forment la cavité laser. Les miroirs sont fabriqués par un traitement multicouche diélectrique. Ils sont conçus pour fonctionner à 1,5 µm, qui est la longueur d'onde utilisée ici. Le verre : Er, Yb utilisé est un matériau acheté chez Kigre, aux Etats-Unis. Il possède la composition en Er et Yb suivante : 0,6 à 0,8% en masse en oxyde d'erbium et 20% en masse en oxyde d'ytterbium. Une lamelle de verre de 0,5 ou 0,75 ou 1 mm d'épaisseur a été utilisée, et a été polie pour obtenir deux faces planes et parallèles.

La cavité est pompée par une diode laser émettant autour de 980 nm (achetée chez Spectra Diode Labs aux Etats-Unis).

Les résultats typiques obtenus sont :
- fréquence de répétition : 1 à 50 kHz,
- durée des impulsions : 5 à 20 ns,
- puissance moyenne : 10 à 20 mW,
- énergie des impulsions : 5 à 10 µJ.

Un autre matériau de LMA:Co, dopé à 0,15% (au lieu de 0,3%) a permis d'atteindre des impulsions à une fréquence encore plus élevée (100 kHz et au-delà).

Le procédé de fabrication décrit ci-dessus offre la possibilité de produire des microlasers en grande série, donc à faible coût, ce qui est important pour des applications dans des domaines tels que l'automobile.

En outre, le microlaser ainsi fabriqué possède les avantages déjà cités : il est monolithique, donc d'emploi souple, et ne nécessite ni réglage optique ni alignement, car le procédé de fabrication monolithique permet l'autoalignement du laser. De plus, les microlasers selon l'invention permettent d'atteindre de hautes fréquences de répétition (200 Hz et plus).

Parmi les applications industrielles possibles des microlasers, on peut notamment citer la télémétrie laser, le marquage et micro-usinage laser, l'injection laser (pour les lasers de puissance), la détection de polluants, l'instrumentation scientifique et médicale.

En outre, l'association des microlasers et des technologies micro-optiques (microlentilles) tout en gardant l'avantage de la fabrication collective et le faible coût permet :
- d'améliorer les performances des microlasers (cavités stables, focalisation de la pompe),
- de réaliser des microsystèmes optiques destinés à des applications particulières, telles que :
   - la réalisation de réseaux 2D (éventuellement adressables)
   - le micro-lidar (télédétection de vitesse de vent, de pollution, ...),
   - la détection d'obstacle pour l'automobile,
   - la télémétrie laser,
   - les machines de marquage laser compact à faible coût.

Plusieurs de ces applications, notamment le marquage, le micro-lidar, la détection d'obstacle, la télémétrie nécessitent des puissances crêtes élevées, donc un fonctionnement déclenché. Le microlaser selon l'invention se prêtera très bien à de telles applications.

Le microlaser selon la présente invention peut être associée, en vue de la réalisation d'un télémètre, à un dispositif de mesure de la durée d'un intervalle de temps tel que décrit par exemple dans EP-706 100 ou dans la demande FR-96 02616 du 1er MARS 1996. Le dispositif comporte en outre des moyens de réception d'une impulsion lumineuse réfléchie par un objet, et de détection de l'instant de réception de cette impulsion, ainsi que des moyens de détection de l'instant d'émission d'une impulsion du microlaser. Un tel télémètre peut être monté sur des véhicules automobiles afin d'éviter les collisions ou d'aider à la conduite du véhicule par mauvaise visibilité.

## Revendications

1. Cavité microlaser (10, 16) comportant un milieu actif solide (2) émettant au moins dans une gamme de longueurs d'onde comprise entre 1,5 et 1,6 µm, et un absorbant saturable (4, 18), **caractérisée en ce que** l'absorbant saturable (4, 18) a pour formule CaF₂:Co²⁺ ou MgF₂:Co²⁺ ou SrF₂:Co²⁺ ou BaF₂:Co²⁺ ou La_{0,9}Mg_{0,5-x}CoₓAl_{11,433}O₁₉ ou YAlO₃:Co²⁺ ou YAl₁₋₂ₓCoₓSiₓO₃ ou Y₃Al_{5-x-y-2z}GaₓSc_{y}Co_{z}Si_{z}O₁₂ ou Y₃₋ₓLuₓAl₅O₁₂:Co²⁺ avec 0<x pour ce composé ou Y₃₋ₓLuₓAl_{5-2y}Co_{y}Si_{y}O₁₂ ou Sr₁₋ₓMgₓLa_{y}Al_{12-y}O₁₉:Co²⁺ ou Sr₁₋ₓMg_{x-y}Co_{y}La_{z}Al_{12-z}O₁₉, avec o<y<x pour ce dernier composé.

2. Cavité microlaser selon la revendication 1, l'absorbant saturable (4) ayant la forme d'une couche mince.

3. Cavité microlaser selon la revendication 2, la couche mince ayant une épaisseur comprise entre 1 µm et 150 µm.

4. Cavité microlaser selon la revendication 2 ou 3, la couche mince étant susceptible d'avoir été obtenue par technique sol-gel, ou bien par épitaxie par jet moléculaire ou en phase liquide.

5. Cavité microlaser selon l'une des revendications 1 à 4, le milieu actif solide étant constitué d'un matériau de base choisi parmi Y₃Al₅O₁₂ (YAG), LaMgAl₁₁O₁₉ (LMA), Y₂SiO₅ (YSO), GdVO₄, Y₃Sc₂Ga₃O₁₂ (YSGG), SrY₄(SiO₄)₃O (SYS), Ca₂Al₂SiO₇ (CAS) et dopé ou bien avec de l'erbium ou avec du chrome ou avec un codopage erbium-ytterbium, ou bien avec un codopage erbium-ytterbium-cérium.

6. Cavité microlaser selon l'une des revendications 1 à 4, le milieu actif solide étant un verre phosphate dopé à l'erbium et à l'ytterbium, les dopages à l'erbium et à l'ytterbium étant respectivement compris entre 0,5 et 0,9% et entre 15% et 20% en masse d'oxyde.

7. Cavité microlaser selon l'une des revendications 1 à 6, la cavité étant stable.

8. Cavité microlaser selon la revendication 7, comportant un miroir d'entrée (6) et un miroir de sortie (8), l'un de ces deux miroirs au moins étant concave.

9. Cavité microlaser selon l'une des revendications 1 à 6, comportant en outre une microlentille formée directement sur le matériau laser.

10. Procédé de réalisation d'une cavité microlaser comportant la réalisation d'un milieu actif solide (2) émettant au moins dans une gamme de longueurs d'onde comprise entre 1,5 et 1,6 µm, et la réalisation d'un absorbant saturable, **caractérisé en ce que** l'absorbant saturable a pour formule CaF₂:Co²⁺ ou MgF₂:Co²⁺ ou SrF₂:Co²⁺ ou BaF₂:Co²⁺ ou La_{0,9}Mg_{0,5-x}CoₓAl_{11,433}O₁₉ ou YAlO₃:Co²⁺ ou YAl₁₋₂ₓCoₓSiₓO₃ ou Y₃Al_{5-x-y-2z}GaₓSc_{y}Co_{z}Si_{z}O₁₂ ou Y₃₋ₓLuₓAl₅O₁₂:Co²⁺ avec 0<x pour ce composé ou Y₃₋ₓLuₓAl_{5-2y}Co_{y}Si_{y}O₁₂ ou Sr₁₋ₓMgₓLa_{y}Al_{12-y}O₁₉:Co²⁺ ou Sr₁₋ₓMg_{x-y}Co_{y}La_{z}Al_{12-z}O₁₉ avec 0<y<x pour ce dernier composé.

11. Procédé selon la revendication 10, comportant en outre le conditionnement ,à une épaisseur prédéterminée, du matériau constitutif du milieu actif solide.

12. Procédé selon l'une des revendications 10 ou 11, l'absorbant saturable étant réalisé sous forme de couche mince.

13. Procédé selon la revendication 12, la couche mince ayant une épaisseur comprise entre 1 µm et 150 µm.

14. Procédé selon la revendication 12 ou 13, l'absorbant saturable étant réalisé par épitaxie ou par technique sol-gel.

15. Procédé selon la revendication 12 ou 13, l'absorbant saturable étant réalisé à partir d'un matériau massif conditionné en lame mince.

16. Procédé selon la revendication 15, la lame mince étant collée contre le matériau actif laser.

17. Procédé selon la revendication 15, la lame mince d'absorbant saturable et le milieu actif laser étant assemblés par collage par contact intime ou par adhérence moléculaire.

18. Procédé selon l'une des revendications 12 à 14, la couche mince étant directement réalisée sur le milieu actif laser.

19. Procédé selon l'une des revendications 12 à 14, la couche mince étant préalablement déposée sur un substrat, le substrat étant ensuite assemblé avec le milieu laser.

20. Procédé selon la revendication 19, le substrat étant ensuite enlevé.

21. Dispositif de télémétrie laser, fonctionnant sur le principe de la mesure du temps de vol d'une impulsion lumineuse, **caractérisé en ce qu'**il comprend :
- un microlaser à déclenchement passif, comportant une cavité microlaser selon l'une des revendications 1 à 9,
- des moyens de réception d'une impulsion lumineuse réfléchie par un objet, et de détection de l'instant de réception de cette impulsion,
- des moyens de détection de l'instant d'émission d'une impulsion du microlaser,
- un dispositif pour mesurer l'intervalle de temps séparant l'instant d'émission d'une impulsion microlaser de l'instant de réception d'un faisceau réfléchi.

22. Véhicule automobile équipé d'un télémètre selon la revendication 21.

## Patentansprüche

1. Mikrolaserresonator (10, 16) mit einem festkörperförmigen aktiven Medium (2), das wenigstens in einem zwischen 1,5 und 1,6 µm enthaltenen Wellenlängenbereich emittiert, und einem sättigbaren Absorber (4, 18),
**dadurch gekennzeichnet,**
**dass** der sättigbare Absorber (4, 18) die Formel CaF₂:Co²⁺ hat oder MgF₂:Co²⁺ oder SrF₂:Co²⁺ oder BaF₂:O²⁺ oder La_{0,9}Mg_{0,5-x}CoₓAl_{11,433}O₁₉ oder YAlO₃:Co²⁺ oder YAl₁₋₂ₓCoₓSiₓO₃ oder Y₃Al_{5-x-y-2z}GaₓSc_{y}Co_{z}Si_{z}O₁₂ oder Y₃₋ₓLuₓAl₅O₁₂:Co²⁺, mit 0<x für diese Verbindung, oder Y₃₋ₓLuₓAl_{5-2y}Co_{y}Si_{y}O₁₂ oder Sr₁₋ₓMgₓLa_{y}Al_{12-y}O₁₉:Co²⁺ oder Sr₁₋ₓMg_{x-y}Co_{y}La_{z}Al_{12-z}O₁₉, mit 0<y<x für diese letzte Verbindung.

2. Mikrolaserresonator nach Anspruch 1, dessen sättigbarer Absorber (4) die Form einer Dünnschicht hat.

3. Mikrolaserresonator nach Anspruch 2, wobei die Dünnschicht eine zwischen 1 µm und 150 µm enthaltene Dicke hat.

4. Mikrolaserresonator nach Anspruch 2, wobei die Dünnschicht durch die Sol-Gel-Technik oder auch durch Molekularstrahl- oder Flüssigphasenepitaxie erzeugt worden sein kann.

5. Mikrolaserresonator nach einem der Ansprüche 1 bis 4, dessen festköperförmiges aktives Medium durch ein Basismaterial gebildet wird, das ausgewählt wird unter Y₃Al₅O₁₂ (YAG), LaMgAl₁₁O₁₉ (LMA), Y₂SiO₅ (YSO), GdVO₄, Y₃Sc₂Ga₃O₁₂ (YSGG), SrY₄(SiO₄)₃O (SYS), Ca₂Al₂SiO₇ (CAS) und entweder einer Erbiumdotierung oder einer Chromdotierung oder einer Erbium-Yttrium-Codotierung oder einer Erbium-Yttrium-Cerium-Codotierung unterzogen wird.

6. Mikrolaserresonator nach einem der Ansprüche 1 bis 4, dessen festkörperförmiges aktives Medium ein Erbium- und Yttrium-dotiertes Phosphatglas ist, wobei die Erbium- und Yttriumdotierungen jeweils zwischen 0,5 und 0,9% und zwischen 15% und 20% in Oxidmasse enthalten sind.

7. Mikrolaserresonator nach einem der Ansprüche 1 bis 6, wobei der Resonator stabil ist.

8. Mikrolaserresonator nach Anspruch 7 mit einem Eingangsspiegel (6) und einem Ausgangsspiegel (8), wobei wenigstens einer dieser beiden Spiegel konkav ist.

9. Mikrolaserresonator nach einem der Ansprüche 1 bis 6, der außerdem eine direkt auf dem Lasermaterial ausgebildete Mikrolinse umfasst.

10. Verfahren zum Herstellen eines Mikrolaserresonators, die Herstellung eines festkörperförmiges aktiven Mediums (2), das wenigstens in einem zwischen 1,5 und 1,6 µm enthaltenen Wellenlängenbereich emittiert, und die Herstellung eines sättigbaren Absorbers umfassend,
**dadurch gekennzeichnet,**
**dass** der sättigbare Absorber die Formel CaF₂:Co²⁺ hat oder MgF₂:Co²⁺ oder SrF₂:Co²⁺ oder BaF₂:O²⁺ oder La_{0,9}Mg_{0,5-x}CoₓAl_{11,433}O₁₉ oder YAlO₃:Co²⁺ oder YAl₁₋₂ₓCoₓSiₓO₃ oder Y₃Al_{5-x-y-2z}GaₓSc_{y}Co_{z}Si_{z}O₁₂ oder Y₃₋ₓLuₓAl₅O₁₂:Co²⁺, mit 0<x für diese Verbindung, oder Y₃₋ₓLuₓAl_{5-2y}Co_{y}Si_{y}O₁₂ oder Sr₁₋ₓMgₓLa_{y}Al_{12-y}O₁₉:Co²⁺ oder Sr₁₋ₓMg_{x-y}Co_{y}La_{z}Al_{12-z}O₁₉, mit 0<y<x für diese letzte Verbindung.

11. Verfahren nach Anspruch 10 mit außerdem der Konditionierung des das festkörperförmige aktive Medium bildenden Materials mit einer festgelegten Dicke.

12. Verfahren nach einem der Ansprüche 10 oder 11, wobei der sättigbare Absorber in Form einer Dünnschicht realisiert wird.

13. Verfahren nach Anspruch 12, wobei die Dünnschicht eine zwischen 1 µm und 150 µm enthaltene Dicke hat.

14. Verfahren nach Anspruch 12 oder 13, wobei der sättigbare Absorber durch Epitaxie oder die Sol-Gel-Technik realisiert wird.

15. Verfahren nach Anspruch 12 oder 13, wobei der sättigbare Absorber aus einem massiven Material realisiert wird, konditioniert als dünnes Plättchen.

16. Verfahren nach Anspruch 15, wobei das dünne Plättchen auf das aktive Lasermaterial geklebt wird.

17. Verfahren nach Anspruch 15, wobei das dünne Plättchen aus sättigbarem Lasermaterial und das aktive Lasermedium mittels Klebung durch engen Kontakt oder mittels Molekularhaftung zusammengebaut werden.

18. Verfahren nach einem der Ansprüche 12 bis 14, wobei die Dünnschicht direkt auf dem aktiven Lasermedium realisiert wird.

19. Verfahren nach einem der Ansprüche 12 bis 14, wobei die Dünnschicht vorher auf einem Substrat abgeschieden wird und dieses Substrat anschließend mit dem Lasermedium zusammengebaut wird.

20. Verfahren nach Anspruch 19, wobei das Substrat anschließend entfernt wird.

21. Lasertelemetrie-Vorrichtung, die nach dem Prinzip der Flugzeitmessung eines Lichtimpulses funktioniert, **dadurch gekennzeichnet, dass** sie umfasst:
- einen Mikrolaser mit passiver Güteschaltung und einem Mikrolaserresonator nach einem der Ansprüche 1 bis 9,
- Einrichtungen zum Empfangen eines durch ein Objekt reflektierten Lichtimpulses und zum Detektieren des Empfangszeitpunkts dieses Impulses,
- eine Vorrichtung zum Messen des Zeitintervalls, das den Sendezeitpunkt eines Mikrolaserimpulses vom Empfangszeitpunkt eines reflektierten Strahls trennt.

22. Kraftfahrzeug, ausgerüstet mit einem Telemeter nach Anspruch 21.

## Claims

1. Microlaser cavity (10,16) incorporating:
- a solid active medium (2) emitting at least in a wavelength range between 1.5 and 1.6 µm and a saturable absorber (4,18),
**characterized in that** the saturable absorber (4,18) is of formula CaF₂:Co²⁺ or MgF₂:Co²⁺ or SrF₂:Co²⁺ or BaF₂:Co²⁺ or La_{0.9}Mg_{0.5-x}CoₓAl_{11.433}O₁₉ or YAlO₃:Co²⁺ or YAl₅₋₂ₓCoₓSiₓO₃ or Y₃Al_{5-x-y}GaₓSc_{y}O₁₂:Co or Y₃₋ₓLuₓAl_{5 12}Co Si 0 or Sr₁₋ₓMgₓLa_{y}Al_{12-y}O₁₂:Co²⁺ or Sr₁₋ₓMg_{x-y}Co_{y}La_{z}Al_{12-z}O₁₂, (with o < y < x for the latter compound).

2. Microlaser cavity according to claim 1, the saturable absorber (4) being in the form of a film.

3. Microlaser cavity according to claim 2, the film having a thickness between 1 and 150 µm.

4. Microlaser cavity according to claim 2 or 3, the film having been obtainable by the sol-gel method, or by molecular beam or liquid phase epitaxy.

5. Microlaser cavity according to any one of the claims 1 to 4, the solid active medium being constituted by a base material chosen from among Y₃Al₅O₁₂ (YAG), LaMgAl₁₁O₁₉ (LMA), Y₂SiO₅ (YSO), GdVO₄, Y₃Sc₂Ga₃O₁₂ (YSGG), SrY₄(SiO₄)₃O (SYS), Ca₂Al₂SiO₇ (CAS) and doped either with erbium or with chromium or with an erbium-ytterbium codoping, or an erbium-ytterbium-cerium codoping.

6. Microlaser cavity according to any one of the claims 1 to 4, the solid active medium being a phosphate glass doped with erbium and ytterbium, the erbium and ytterbium doping operations being respectively at between 0.5 and 0.9 and between 15 and 20 wt.% oxide.

7. Microlaser cavity according to any one of the claims 1 to 6, the cavity being stable,

8. Microlaser cavity according to claim 7, having an input mirror (6) and an output mirror (8), at least one of the two mirrors being concave.

9. Microlaser cavity according to any one of the claims 1 to 6, also having a microlens directly formed on the laser material.

10. Process for the production of a microlaser cavity involving the production of a solid active medium (2) emitting at least in a wavelength range between 1.5 and 1.6 µm and the production of a saturable absorber, **characterized in that** the saturable absorber has the formula CaF₂:Co²⁺ or MgF₂:Co²⁺ or SrF₂:Co²⁺ or BaF₂:Co²⁺ or La_{0.9}Mg_{0.5-x}CoₓAl_{11.433}O₁₉ or YAlO₃:Co²⁺ or YAl₅₋₂ₓCoₓSiₓO₃ or Y₃Al_{5-x-y}GaₓSc_{y}O₁₂:Co²⁺ or Y₃Al_{5-x-y-2z}GaₓSc_{y}Co_{z}Si_{z}O₁₂ or Y₃₋ₓLuₓAl₅O₁₂:Co²⁺ or Y₃₋ₓLuₓAl_{5-2y}Co_{y}Si_{y}O₁₂ or Sr₁₋ₓMgₓLa_{y}Al_{12-y}O₁₂:Co²⁺ or Sr₁₋ₓMg_{x-y}Co_{y}La_{z}Al_{12-z}O₁₂ with o < y < x for the latter compound

11. Process according to claim 10, also involving the conditioning to a predetermined thickness of the constituent material of the solid active medium.

12. Process according to one of the claims 10 or 11, the saturable absorber being produced in film form.

13. Process according to claim 12, the film having a thickness between 1 and 150 µm.

14. Process according to claim 12, the saturable absorber being produced by epitaxy or the sol-gel method.

15. Process according to claim 12 or 13, the saturable absorber being produced from a solid material conditioned in thin strip form.

16. Process according to claim 15, the thin strip being bonded to the active laser material.

17. Process according to claim 15, the thin saturable absorber strip and the laser active medium being assembled by bonding, intimate contact or molecular adhesion.

18. Process according to one of the claims 12 to 14, the film being directly produced on the active laser medium.

19. Process according to one of the claims 12 to 14, the film being previously deposited on a substrate, which is then assembled with the laser medium.

20. Process according to claim 19, the substrate then being removed.

21. Laser telemetry device operating on the principle of the measurement of the travel time of a light pulse, **characterized in that** it comprises:
- a passively switched microlaser having a microlaser cavity according to one of the claims 1 to 9,
- means for receiving a light pulse reflected by an object and detection of the reception time of said pulse,
- means for detection of the emission time of a pulse from the microlaser,
- a device for measuring the time interval separating the emission time of a microlaser pulse from the reception time of a reflected beam.

22. Car equipped with a telemeter according to claim 21.
